# EUROPEAN PATENT APPLICATION

(11) **EP 4 557 653 A1**
(43) Date of publication of application: **21.05.2025**
(21) Application number: 23838728.6
(22) Date of filing: 30.06.2023
(51) Int. Cl.: H04L 5/00, H04L 1/18, H04W 4/40

(54) **SIDELINK FEEDBACK PROCESSING METHOD AND APPARATUS, AND TERMINAL AND NETWORK-SIDE DEVICE**

(30) Priority: 11.07.2022 CN 202210813664
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN)
(74) Representative: Lavoix
(86) International application number: PCT/CN2023/104332
(87) International publication number: WO 2024/012236

(57) **Abstract**

This application discloses a sidelink feedback processing method and apparatus, a terminal, and a network-side device, and pertains to the field of communication technologies. The sidelink feedback processing method in embodiments of this application includes: obtaining, by a terminal, first information; and determining, by the terminal, a target uplink resource based on the first information, where the target uplink resource is used for sending feedback information corresponding to a sidelink SL transmission resource in an unlicensed band to a control node; and the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

## Description

### CROSS-REFERENCE TO RELATED APPLICATIONS

This application claims priority to Chinese Patent Application No. 202210813664.4, filed in China on July 11, 2022, which is incorporated herein by reference in its entirety.

### TECHNICAL FIELD

This application pertains to the field of communication technologies, and specifically relates to a sidelink feedback processing method and apparatus, a terminal, and a network-side device.

### BACKGROUND

With the development of communication technologies, in mobile communication systems, shared spectrums such as unlicensed bands (unlicensed band) may serve as a supplement to licensed bands (licensed band) to assist operators in expanding services. In sidelink (Sidelink, SL) communication systems, to obtain more resources to meet the service requirements of SL transmissions (such as SL-based extended reality, virtual reality, or positioning services), it may be necessary to perform SL transmissions on unlicensed bands. However, most of the current SL technology frameworks are designed for licensed bands or intelligent transportation system (Intelligent Transportation System, ITS) bands. On unlicensed bands, there may be other wireless technologies such as wireless fidelity (Wireless Fidelity, Wi-Fi). Therefore, it is necessary to first monitor whether the resources are idle and, after confirming that they are idle, attempt to initiate channel access.

Since terminals may fail to obtain SL transmission resources or SL feedback resources, according to existing rules, terminals are unable to feed back the corresponding feedback information to the control node. For example, in a case that a physical uplink control channel (Physical Uplink Control Channel, PUCCH) configured for a terminal for feeding back the hybrid automatic repeat request acknowledgement (Hybrid Automatic Repeat Request Acknowledgement, HARQ-ACK) information corresponding to feedback resources of slot n is located in slot n+k, if the terminal fails to obtain SL transmission resources or SL feedback resources, the terminal will be unable to obtain HARQ-ACK information and thus will not perform HARQ-ACK feedback. In this case, a base station, having not received a negative acknowledgment (Negative Acknowledge, NACK), may consider the transmission status of the terminal to be an Acknowledgement (Acknowledgement, ACK), which will cause the terminal and the network-side device to have inconsistent understandings of the transmission status. Therefore, in the prior art, the transmission reliability of feedback information corresponding to sidelink SL transmission resources in unlicensed bands is poor.

### SUMMARY

Embodiments of this application provide a sidelink feedback processing method and apparatus, a terminal, and a network-side device, which can solve the problem of poor transmission reliability of feedback information corresponding to sidelink SL transmission resources in an unlicensed band.

According to a first aspect, a sidelink feedback processing method is provided and includes:
obtaining, by a terminal, first information; and
determining, by the terminal, a target uplink resource based on the first information, where the target uplink resource is used for sending feedback information corresponding to a sidelink SL transmission resource in an unlicensed band to a control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

According to a second aspect, a sidelink feedback processing method is provided and includes:
sending, by a control node, first information to a terminal, where the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

According to a third aspect, a sidelink feedback processing apparatus is provided and includes:
an obtaining module, configured to obtain first information; and
a determining module, configured to determine a target uplink resource based on the first information, where the target uplink resource is used for sending feedback information corresponding to a sidelink SL transmission resource in an unlicensed band to a control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

According to a fourth aspect, a sidelink feedback processing apparatus is provided and includes:
a first sending module, configured to send first information to a terminal, where the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

According to a fifth aspect, a terminal is provided, where the terminal includes a processor and a memory, the memory stores a program or instructions capable of running on the processor, and when the program or instructions are executed by the processor, the steps of the method according to the first aspect are implemented, or the steps of the method according to the second aspect are implemented.

According to a sixth aspect, a terminal is provided, including a processor and a communication interface, where
the communication interface is configured to obtain first information; and
the processor is configured to determine a target uplink resource based on the first information, where the target uplink resource is used for sending feedback information corresponding to a sidelink SL transmission resource in an unlicensed band to a control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource; or
when the terminal is a control node, the communication interface is configured to send first information to a terminal, where the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

According to a seventh aspect, a network-side device is provided, where the network-side device includes a processor and a memory, and the memory stores a program or instructions capable of running on the processor, and when the program or instructions are executed by the processor, the steps of the method according to the second aspect are implemented.

According to an eighth aspect, a network-side device is provided and includes a processor and a communication interface, where the communication interface is configured to send first information to a terminal, the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

According to a ninth aspect, a communication system is provided and includes a terminal and a control node, where the terminal is capable of being configured to execute the steps of the sidelink feedback processing method according to the first aspect, and the control node is capable of being configured to execute the steps of the sidelink feedback processing method according to the second aspect.

According to a tenth aspect, a readable storage medium is provided, where the readable storage medium stores a program or instructions thereon, and when the program or instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the steps of the method according to the first aspect, or to implement the steps of the method according to the second aspect.

According to a twelfth aspect, a computer program/program product is provided, where the computer program/program product is stored in a storage medium, and the computer program/program product is executed by at least one processor to implement the steps of the method according to the first aspect, or to implement the steps of the method according to the second aspect.

In the embodiments of this application, first information is obtained, and a target uplink resource is determined based on the first information, so that feedback information corresponding to a sidelink SL transmission resource in an unlicensed band can be sent on the target uplink resource to a control node. In this way, the target uplink resource can be determined based on at least one of the first predefined transmission resource, the first predefined feedback resource, the predefined time, and the target control signaling. This not only improves the flexibility of determining the target uplink resource, and in turn improves the reliability of transmission of feedback information corresponding to a sidelink SL transmission resource in an unlicensed band, but also improves the scheduling efficiency of the base station.

### BRIEF DESCRIPTION OF DRAWINGS

FIG. 1 is a schematic structural diagram of a network to which this application is applicable;
FIG. 2 is a flowchart of a sidelink feedback processing method according to this application;
FIG. 3 to FIG. 11 show examples of transmission scenarios applied in a sidelink feedback processing method according to an embodiment of this application;
FIG. 12 is a flowchart of another sidelink feedback processing method according to this application;
FIG. 13 is a structural diagram of a sidelink feedback processing apparatus according to this application;
FIG. 14 is a structural diagram of another sidelink feedback processing apparatus according to this application;
FIG. 15 is a structural diagram of a communication device according to this application;
FIG. 16 is a structural diagram of a terminal according to this application; and
FIG. 17 is a structural diagram of a network-side device according to this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

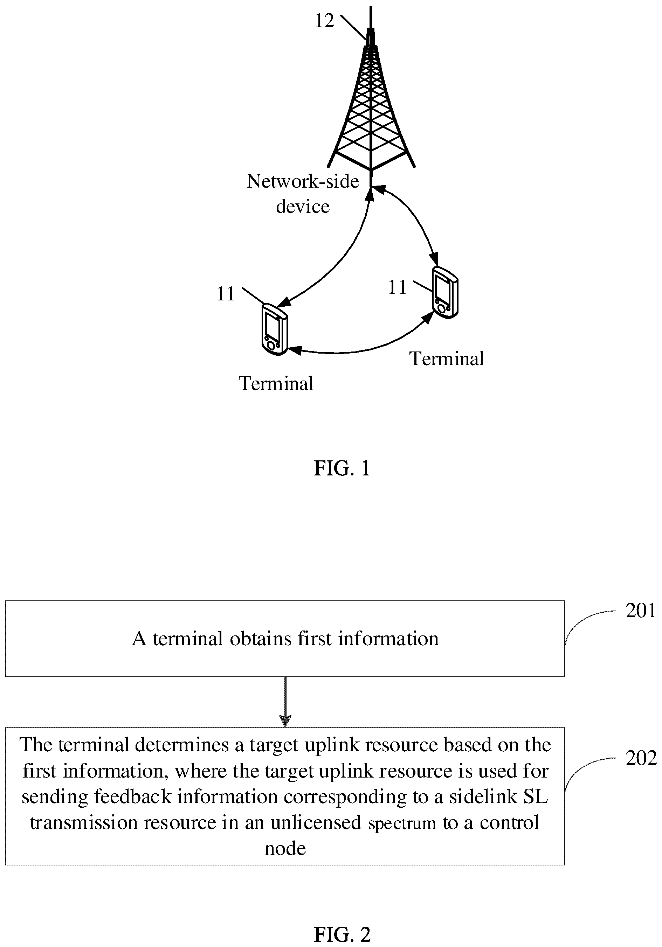

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the embodiments of this application do not impose any limitation on a specific type of the terminal 11. The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a Wi-Fi node. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or another appropriate term in the art. Provided that the same technical effect is achieved, the base station is not limited to a specific technical term. It should be noted that the base station in the NR system is only used as an example in the embodiments of this application for illustration, but the base station is not limited to any specific type.

For ease of understanding, the following describes some content in the embodiments of this application.

### I. Shared spectrum or unlicensed bands.

In mobile communication systems, shared spectrums such as unlicensed bands may serve a supplement to licensed bands to assist operators in expanding services. To be consistent with new radio (New Radio, NR) deployment and maximize NR-based unlicensed access, unlicensed bands may operate in the 5GHz, 37GHz, and 60GHz bands. Because unlicensed bands are shared by multiple radio access technologies (Radio Access Technology, RAT), such as Wi-Fi, radar, and long term evolution license assisted access (Long Term Evolution License Assisted Access, LTE-LAA), in some countries or regions, the use of unlicensed bands must comply with regulations (regulation), for example, listen before talk (listen before talk, LBT) or maximum channel occupancy time (Maximum Channel Occupancy Time, MCOT), to ensure that all devices can fairly use the resources. In a case that a transmission node needs to send information, it is required to perform LBT first to perform energy detection (Energy Detection, ED) on surrounding nodes. If detected energy is lower than a threshold, the channel is considered to be idle (idle) and the transmission node can send the information. If the detected energy is not lower than the threshold, the channel is considered to be busy and the transmission node cannot send the information. The transmission node may be a base station, a terminal, a Wi-Fi access point (Access Point, AP), or the like. After the transmission node starts transmission, the channel occupancy time (Channel Occupancy Time, COT) cannot exceed MCOT.

Common categories (category) of LBT may be classified into category 1, category 2, and category 4. Category 1 LBT means the transmitting node does not perform LBT, in other words, no LBT or immediate transmission (immediate transmission) is performed. Category 2 LBT is a one-shot (one-shot) LBT. To be specific, the node performs LBT once before transmission; if the channel is idle, it performs transmission; and if the channel is busy, it does not perform transmission. Category 4 LBT is a back-off (back-off)-based channel listening mechanism. When detecting that a channel is busy, the transmission node performs back-off and continues to listen until it detects that a channel is idle. For an NR node (NR Node B, gNB), Category 2 LBT is applied to the physical downlink shared channel (Physical Downlink Shared Channel, PDSCH) with no demodulation reference signal (Demodulation Reference Signal, DMRS), and Category 4 LBT is applied to the PDSCH, the physical downlink control channel (Physical Downlink Control Channel, PDCCH), and the enhanced physical downlink control channel (Enhanced Physical Downlink Control Channel, ePDCCH). For a terminal, Category 4 LBT corresponds to a type 1 uplink channel access procedure (type 1 UL channel access procedure), and Category 2 LBT corresponds to a type 2 uplink channel access procedure (type 2 UL channel access procedure).

LBT includes two types, namely, frame-based equipment (Frame-Based Equipment, FBE) and load based equipment (Load Based Equipment, LBE).

FBE means that a device performs transmission/reception timing using a periodic structure, with a period being a fixed frame period (Fixed Frame Period, FFP). An FBE node occupies a channel through an LBT-based channel access mechanism. A node initiating a transmission sequence including one or more consecutive transmissions is called an initiating device (Initiating Device), and other nodes are called responding devices (Responding Device). The FBE node may be an initiating device, a responding device, or a function supporting the two nodes.

For LBE, the transmission node may start LBT at any time and cannot perform transmission until it detects that a channel is idle. For the transmission node, there is no fixed listening time, and there is no need to skip when the channel is busy. The transmitting node can continue to listen by backing off (back-off) several enhanced clear channel assessments (Enhanced Clear Channel Assessment, eCCA) until the eCCA counter (counter) reaches zero.

On SL, LBE in unlicensed bands may be used for channel access to implement information transmission.

### II. NR SL resource allocation mode.

NR Vehicle-to-Everything (NR Vehicle-to-Everything, NR V2X) supports two resource allocation modes: scheduled resource allocation (Scheduled resource allocation) mode and autonomous resource selection (autonomous resource selection) mode, where the former is usually called mode-1 (mode-1), and the latter is usually called mode-2 (mode-2). In the former mode, a network-side device controls and allocates a resource for each UE. In the latter mode, the UE autonomously selects a resource.

In mode-1, a base station may schedule or activate an NR SL resource for a user through downlink control information (Downlink Control Information, DCI), and the format (format) of this SL DCI is DCI format 3-0. In mode-1, the base station may activate an LTE SL resource for a user through another DCI format 3-1.

Mode-2 may be further divided into multiple sub-modes:
Mode2d: a scheduling UE (scheduling UE) or a header UE (header UE) may schedule SL transmissions of other terminals;
Mode2b: terminal A may send assistance information to terminal B to assist the SL transmission of terminal B; and
Mode2c: a terminal acquires persistent or semi-persistent paired SL resources for transmission.

### III. Sidelink hybrid automatic repeat request (Sidelink Hybrid Automatic Repeat Request, Sidelink HARQ) information reporting.

To improve the reliability of data transmission on sidelink and utilization of resources, a HARQ feedback mechanism is also introduced in sidelink technology: after receiving a physical sidelink control channel (Physical SideLink Control Channel, PSCCH) and/or physical sidelink shared channel (Physical SideLink Shared Channel, PSSCH), a sidelink receiving user feeds back sidelink hybrid automatic repeat request acknowledgement (Sidelink Hybrid Automatic Repeat Request acknowledgement, sidelink HARQ-ACK) information on a physical sidelink feedback channel (Physical SideLink Feedback Channel, PSFCH) corresponding to the PSCCH and/or PSSCH to indicate whether sidelink data is successful or not. A sidelink sending user can know whether the previous transmission is successful or not after receiving the sidelink HARQ-ACK information on the sidelink. It should be noted that a sidelink user may be either a sending or receiving user, meaning one user may perform both reception and transmission at different time points or frequencies.

The transmission of sidelink data packets may be performed on sidelink between users. Therefore, the control node may not directly know whether the transmission of the sidelink data packet is successful. It is required that the user send sidelink HARQ ACK information (such as sidelink acknowledge (sidelink ACK) or negative acknowledge (sidelink NACK)) to the control node, so that the control node can further determine whether the transmission on the sidelink is successful. In mode-1, a user reports SL HARQ information to a control node via PUCCH or physical uplink shared channel (Physical uplink shared channel, PUSCH).

The SL HARQ information can be reported in a form of codebook, where one uplink resource for SL HARQ information reporting may be associated with one or more PSFCH resources, and a priority of the PSFCH is related to priorities of other corresponding SL transmissions. However, for some special cases, for example, a receiving end does not provide HARQ feedback or a sending end does not detect PSFCH, there is still SL HARQ information.

The following describes in detail a sidelink feedback processing method according to the embodiments of this application using some embodiments and application scenarios thereof with reference to the accompanying drawings.

Referring to FIG. 2, an embodiment of this application provides a sidelink feedback processing method. As shown in FIG. 2, the sidelink feedback processing method includes the following steps.

Step 201: A terminal obtains first information.

Step 202: The terminal determines a target uplink resource based on the first information, where the target uplink resource is used for sending feedback information corresponding to a sidelink SL transmission resource in an unlicensed band to a control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

In this embodiment of this application, the control node may be a network-side device, a terminal with relay and/or scheduling capabilities, a terminal directly indicated/scheduled by a base station, a terminal that successfully accesses/preempts resources, a terminal involved in resource sharing, or the like.

Optionally, the SL transmission resource may include at least one of PSSCH, PSCCH, sidelink synchronization signal and PBCH block (sidelink Synchronization Signal and PBCH block, S-SSB), and sidelink reference signal (sidelink Reference Signal, SL RS). The SL feedback resource may be PSSCH, PSCCH, PSFCH, or SL RS that carry a response to a message transmitted on the SL transmission resource, for example, PSFCH. It should be understood that in this embodiment of this application, transmission may include receiving or sending, for example, a transmitted message may be understood as a message sent or a message received.

Optionally, in another possible scenario, the SL transmission resource is PSFCH, and the SL feedback resource is at least one of PSSCH, PSCCH, sidelink synchronization signal and PBCH block (sidelink Synchronization Signal and PBCH block, S-SSB), and sidelink reference signal (sidelink Reference Signal, SL RS) that respond to or feed back the PSFCH. For example, when the PSFCH indicates recommended resource information and/or non-recommended resource information, based on the recommended resource information and/or non-recommended resource information, for example, selecting a recommended resource from candidate resources or excluding a non-recommended resource from candidate resources, UE may select an appropriate PSSCH resource for a subsequent transmission, where the PSSCH resource selected by the UE may be considered as a response to the PSFCH. Alternatively, the PSFCH carries HARQ-ACK information and/or an execution result of a first behavior, so the UE determines, based on the HARQ-ACK information and/or the execution result of the first behavior, whether to reselect a resource or whether to perform new transmission. Therefore, the finally transmitted PSSCH may also be considered as a response to the PSFCH.

It should be understood that in this embodiment of this application, transmission may be interpreted as sending or receiving.

For example, in some embodiments, the SL transmission resource is PSSCH and/or PSCCH, and the SL feedback resource is PSFCH; in some embodiments, the SL transmission resource is a resource carrying channel state information (Channel State Information, CSI) request (request)/radio resource control (Radio Resource Control, RRC) connection establishment request/RRC configuration message/DRX assistance information/DRX configuration, and the SL feedback resource is a resource carrying a corresponding response message, such as a resource carrying CSI report (report)/RRC connection establishment response/reject message/success message/DRX response or assistance information.

In some embodiments, the SL transmission resource may be an occasion of (one or more, one or more groups of) resource(s), a time-domain resource, a time-domain range (for example, COT), a frequency-domain resource, a frequency-domain range, time-frequency resource, a configured grant (configured grant, CG), a timer (for example, resource corresponding to the timer running, such as resource used before the timer starts or after the timer ends), and a counter (resource or time-domain range used when the counter decrements to a certain threshold or positively increments to a certain threshold, for example, resource or time-domain range used when the counter decrements to 0).

Optionally, the first predefined transmission resource may be at least some of SL transmission resources indicated, configured, or scheduled to the terminal by the base station or other nodes with a scheduling capability. The first predefined feedback resource may be at least some of SL feedback resources indicated, configured, or scheduled to the terminal by the base station or other nodes with a scheduling capability, and/or SL feedback resources corresponding to at least some of SL transmission resources indicated, configured, or scheduled to the terminal by the base station or other nodes with a scheduling capability. Certainly, in some other embodiments, the first predefined transmission resource may alternatively be an SL transmission resource autonomously determined or monitored by the terminal, or may be at least some of pre-configured SL transmission resources. Similarly, the first predefined feedback resource may alternatively be an SL feedback resource autonomously determined or monitored by the terminal, or may be at least some of pre-configured SL feedback resources.

Optionally, the terminal may be any one of the following: a first terminal, a second terminal, and a third terminal, where the first terminal is a terminal performing transmission or reception on the SL transmission resource, the second terminal is a terminal that communicates with the first terminal or a terminal that needs to perform feedback on the SL feedback resource, and the third terminal is a terminal other than the first terminal and the second terminal.

It should be noted that for the first behavior, the terminal may monitor a resource, a channel on which a resource is located, or a resource block set (resource block set, RB set) to which a resource belongs, for example, perform LBT. When it is monitored that the resource and/or the channel on which the resource is located or the RB set to which a resource belongs is idle, it can be considered that the terminal has obtained the right to use the resource and/or the channel on which the resource is located or the RB set to which the resource belongs, or it can be considered that the terminal has successfully accessed the resource and/or the channel on which the resource is located or the RB set to which the resource belongs. Further, the terminal may only be able to use or access the resource and/or the channel on which the resource is located or the RB set to which the resource belongs for a certain period, where the period may be one COT. Further, the terminal may share this COT with others. For example, the terminal may indicate other terminals to share (share), and other terminals may use the resource after a short-time monitoring or even without monitoring.

In this embodiment of this application, first information is obtained, and a target uplink resource is determined based on the first information, so that feedback information corresponding to a sidelink SL transmission resource in an unlicensed band can be sent on the target uplink resource to a control node. In this way, the target uplink resource can be determined based on at least one of the first predefined transmission resource, the first predefined feedback resource, the predefined time, and the target control signaling. This not only improves the flexibility of determining the target uplink resource, and in turn improves the reliability of transmission of feedback information corresponding to a sidelink SL transmission resource in an unlicensed band, but also improves the scheduling efficiency of the base station.

In this embodiment of this application, when the first terminal is a terminal indicated or scheduled by the control node, the first terminal may also be understood as a mode-1 terminal. When the second terminal is a terminal indicated or scheduled by the control node, the second terminal may also be understood as a mode-1 terminal.

In other words, the foregoing first terminal and second terminal meet any one of the following:
the first terminal is a mode-1 terminal and/or a terminal scheduled by the control node and/or a terminal indicated by the control node;
both the first terminal and the second terminal are mode-1 terminals and/or terminals scheduled by the control node and/or terminals indicated by the control node; and
the first terminal is the peer UE or communication UE of a mode-1 terminal and/or the peer UE or communication UE of a terminal scheduled by the control node and/or the peer UE or communication UE of a terminal indicated by the control node, and the second terminal is a mode-1 terminal and/or a terminal scheduled by the control node and/or a terminal indicated by the control node.

Optionally, in some embodiments, the first predefined transmission resource includes at least one of the following: any SL transmission resource; each SL transmission resource; the A-th SL transmission resource, A being a positive integer; an SL transmission resource at a predefined time-domain position; an SL transmission resource corresponding to a predefined number; the last SL transmission resource among SL transmission resources corresponding to the same SL feedback resources; an SL transmission resource corresponding to a predefined number of defers; an SL transmission resource corresponding to reaching a limit corresponding to defer, access, or listen before talk LBT; the first SL transmission resource after successful access; and the first SL transmission resource after successful LBT.

In these embodiments of this application, the first predefined resource may be understood as any SL transmission resource in SL transmission resources configured, indicated, or scheduled to the terminal; or understood as each SL transmission resource in SL transmission resources configured, indicated, or scheduled to the terminal; or understood as the A-th SL transmission resource in the SL transmission resources configured, indicated, or scheduled to the terminal; or understood as an SL transmission resource at a predefined time-domain position in SL transmission resources configured, indicated, or scheduled to the terminal; or understood as an SL transmission resource corresponding to a predefined number in SL transmission resources configured, indicated, or scheduled to the terminal; or understood as the last SL transmission resource of SL transmission resources corresponding to the same SL feedback resource in SL transmission resources configured, indicated, or scheduled to the terminal.

The number of defers (defer) may be understood as actual defers of a predefined number of times or assumed defers of a predefined number of times. For example, a base station indicates three resources, a terminal starts LBT from the first resource or before the first resource. If the terminal fails to access the first resource, it continues LBT to attempt accessing the next resource. In this case, an SL transmission resource corresponding to two defers (defer may be understood as deferring to the next resource in a case of LBT or access failure) is the third transmission resource.

The limits corresponding to reaching defer, access, or listen before talk LBT may be understood as reaching the predefined number of defers, corresponding to the predefined number of accesses, or corresponding to the predefined number of LBT failures, reaching the total number of access failures, or may be understood as reaching the predefined number of access failures, reaching the predefined number of LTB failures, reaching the total number of access failures, reaching the maximum limit of the total number of LTB failures, reaching the maximum limit of continuous access failures, and reaching the maximum limit of the number of LBT failures.

The first SL transmission resource corresponding to the successful access may be understood as the first SL transmission resource corresponding to the N-th successful access; and the first SL transmission resource after successful LBT may be understood as the first SL transmission resource after the N-th successful LBT. N is a positive integer.

Optionally, in some embodiments, the first predefined transmission resource is within the first time, and the first time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter (resource or time-domain range corresponding to when the counter decrements to a certain threshold or positively increments to a certain threshold, for example, resource or time-domain range corresponding to when the counter decrements to 0), a time corresponding to obtained occupancy, a time before obtaining occupancy, a time after successful access, and a time corresponding to failed access.

In these embodiments of this application, if the first predefined transmission resource is assumed to be the last SL transmission resource and is required to be within the first time, the first predefined resource may be understood as the last SL transmission resource within the first time.

For example, in some embodiments, the first time may be a COT obtained by the first terminal and/or the second terminal.

For example, in some embodiments, the first time is a time after obtaining occupancy or after successful access. For example, the first predefined transmission resource is the last SL transmission resource after obtaining occupancy and/or after successful access and/or corresponding to successful LBT.

For example, in some embodiments, the first time is a time before not obtaining occupancy and/or before being unable to access and/or corresponding to failed LBT. For example, the first predefined transmission resource is the last SL transmission resource before not obtaining occupancy and/or before being unable to access and/or corresponding to failed LBT.

Optionally, in some embodiments, in a case that the first information includes the first predefined transmission resource, that the terminal determines a target uplink resource based on the first information includes:
the terminal determines a target uplink resource corresponding to each SL transmission resource in the first predefined transmission resource according to an association relationship between each SL transmission resource in the first predefined transmission resource and the target uplink resource.

Optionally, in some embodiments, in a case that the first information includes the first predefined feedback resource, that the terminal determines a target uplink resource based on the first information includes any one of the following:
the terminal determines, according to an association relationship between each SL feedback resource in T SL feedback resources and a target uplink resource, the target uplink resource corresponding to each SL feedback resource in the T SL feedback resources, where T is a positive integer, the T SL feedback resources are feedback resources indicated, configured, pre-configured, or scheduled to the terminal, or feedback resources obtained by the terminal through autonomous determination or monitoring, and the T SL feedback resources include the first predefined feedback resource; and
the terminal determines the target uplink resource based on a target feedback resource in the first predefined feedback resource; where
the target feedback resource includes at least one of the following: any SL feedback resource; each SL feedback resource; the B-th SL feedback resource, B being a positive integer; an SL feedback resource at a predefined time-domain position; an SL feedback resource corresponding to a predefined number; the last SL feedback resource among SL feedback resources corresponding to a same SL feedback resource; an SL feedback resource corresponding to a predefined number of defers; an SL feedback resource corresponding to reaching a limit corresponding to defer, access, or LBT; the first SL feedback resource after successful access; and the first SL feedback resource after successful LBT.

The first SL transmission resource corresponding to the first successful access may be understood as the first SL transmission resource corresponding to the M-th successful access; and the first SL transmission resource after successful LBT may be understood as the first SL transmission resource after the M-th successful LBT. M is a positive integer.

In these embodiments of this application, the target feedback resource may be understood as an SL feedback resource in SL feedback resources corresponding to the first predefined transmission resource. For example, the target feedback resource may be any SL feedback resource in SL feedback resources corresponding to the first predefined transmission resource; may be each SL feedback resource of SL feedback resources corresponding to the first predefined transmission resource; may be the B-th SL feedback resource in SL feedback resources corresponding to the first predefined transmission resource; may be an SL feedback resource corresponding to a predefined number in SL feedback resources corresponding to the first predefined transmission resource; or may be the last SL feedback resource of SL feedback resources corresponding to a same SL feedback resource.

In some embodiments, the target uplink resource may be determined based on a predefined SL feedback resource corresponding to a defer. For example, if there are four SL feedback resource candidates, UE starts LBT from the first resource, and continues LBT on the next resource after failure, where the SL transmission resource corresponding to two defers is the third SL feedback resource candidate.

Optionally, in some embodiments, the first predefined feedback resource includes an SL feedback resource within a second time; where
the second time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter (resource or time-domain range corresponding to when the counter decrements to a certain threshold or positively increments to a certain threshold, for example, resource or time-domain range corresponding to when the counter decrements to 0), a time corresponding to obtained occupancy, and a time before obtaining occupancy.

In these embodiments of this application, the time-domain range may be understood as a window, a COT, a period, or the like. Optionally, the time range such as the window or the COT may be indicated by the control node, for example, indicated by DCI or determined by the UE after LBT.

Optionally, in some embodiments, the first predefined feedback resource has an SL feedback resources outside the second time, and the SL feedback resource outside the second time is associated with the target uplink resource; where
the second time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter (resource or time-domain range corresponding to when the counter decrements to a certain threshold or positively increments to a certain threshold, for example, resource or time-domain range corresponding to when the counter decrements to 0), a time corresponding to obtained occupancy, and a time before obtaining occupancy.

In other words, the first predefined feedback resource may have some SL feedback resources outside the second time, or may have some feedback resources within the second time.

The some feedback resources within the second time have associated target uplink resources, and the feedback resources outside the second time may have associated target uplink resources or may not have associated target uplink resources.

For example, in some embodiments, the second time may be a COT obtained by the first terminal and/or the second terminal.

For example, in some embodiments, the second time is a time after obtaining occupancy or after successful access. For example, the first predefined transmission resource is the last SL transmission resource after obtaining occupancy and/or after successful access and/or corresponding to successful LBT.

For example, in some embodiments, the second time is a time before not obtaining occupancy and/or before being unable to access and/or corresponding to failed LBT. For example, the first predefined feedback resource is the last SL feedback resource before not obtaining occupancy and/or before being unable to access and/or corresponding to failed LBT.

Optionally, when determining the target uplink resource based on the predefined time, the target uplink resource may be determined based on the SL feedback resource within the second time. For example, in some embodiments, the SL feedback resource within the second time is associated with the target uplink resource, or the target feedback resource within the SL feedback resource within the second time is associated with the target uplink resource.

If the SL feedback resource within the second time is associated with the target uplink resource, the target uplink resource is determined based on the SL feedback resource within the second time, or the first predefined feedback resource is each SL feedback resource within the second time range.

Optionally, in some embodiments, the predefined time meets at least one of the following:
the predefined time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy;
the predefined time includes a first time, the first time being associated with the first predefined transmission resource;
the predefined time includes a second time, the second time being associated with the first predefined feedback resource;
the predefined time is an SL configured grant (Configured Grant, CG) period; and
the predefined time is associated with the target uplink resource (for example, DCI indicates a predefined time and a PUCCH associated with that predefined time).

Optionally, in some embodiments, the target control signaling is associated with the target uplink resource. For example, the DCI indicates one or more PUCCHs.

Optionally, in some embodiments, that the terminal determines a target uplink resource based on the first information includes at least one of the following:
the terminal determines a position of the target uplink resource based on a position offset from a first position or a second position;
the terminal determines a position of the target uplink resource based on an uplink resource position associated with a first position, and/or the terminal determines a format of the target uplink resource based on an uplink resource format associated with the first position; and
the terminal determines a position of the target uplink resource based on an uplink resource position associated with the predefined time or target control signaling, and/or the terminal determines a format of the target uplink resource based on an uplink resource format associated with the predefined time or target control signaling; where
the first position is a position of the first predefined transmission resource, and the second position is a position of the first predefined feedback resource.

In these embodiments of this application, the method of determining the position and/or format of the target uplink resource based on the first predefined transmission resource is as follows.
I. An offset may be set based on the position of the first predefined transmission resource or at least some of SL feedback resources (or referred to as SL feedback resource candidates) in the first predefined transmission resource. An offset position is a position of the target uplink resource. Optionally, the offset is configured or indicated by the control node.
II. Assuming that there is a correspondence between a position of the first predefined transmission resource or positions of at least some of the SL feedback resources in the first predefined transmission resource and the position and/or format of the target uplink resource, the position and/or format of the target uplink resource is determined based on the correspondence. Optionally, the correspondence is configured or indicated by the control node.

Furthermore, the specific method for determining the position and/or format of the target uplink resource based on the predefined time and target control signaling is as follows.
I. An offset may be set based on the predefined time or the start or reception time of target control signaling. An offset position is a position of the target uplink resource. Optionally, the offset is configured or indicated by the control node.
II. Assuming that there is a correspondence between the predefined time or target control signaling (for example, the start or reception time of the predefined time or target control signaling) and a position and/or format of the target uplink resource, the position and/or format of the target uplink resource is determined based on the correspondence. Optionally, the correspondence is configured or indicated by the control node.

Optionally, in some embodiments, an offset value of the position offset is associated with at least one of an access interval, the number of accesses, an access duration, an access type, an LBT interval, the number of LBTs, an LBT duration, and an LBT type.

For example, in some embodiments, type-A LBT corresponds to offset 1, and type-B LBT corresponds to offset 2.

Optionally, in some embodiments, the method further includes:
the terminal sends second information on a target uplink resource meeting a first predefined condition, where the second information includes feedback information of the SL transmission resource; and
the first predefined condition includes at least one of the following:
   an SL transmission resource corresponding to the target uplink resource is successfully accessed, LBT for an SL transmission resource corresponding to the target uplink resource is succeeded, or an SL transmission resource corresponding to the target uplink resource is usable, by at least one terminal;
   an SL feedback resource corresponding to the target uplink resource is successfully accessed, LBT for an SL feedback resource corresponding to the target uplink resource is succeeded, or an SL feedback resource corresponding to the target uplink resource is usable by at least one terminal;
   being the last uplink resource among determined multiple target uplink resources;
   being an SL feedback resource corresponding to the target uplink resource in a case that a limit corresponding to defer, access, or LBT is reached;
   being an SL transmission resource corresponding to the target uplink resource in a case that a limit corresponding to defer, access, or LBT is reached; and
   being a target uplink resource in a case that a limit corresponding to defer, access, or LBT is reached.

For example, in some embodiments, if access to PSFCH1, PSFCH2, and PSFCH3 all fail, after successful access to a channel succeeds, an occasion to transmit on PSFCH4 associated with PUCCH4 is obtained, and PUCCH4 may actually be used by the first terminal and/or other UEs for reporting.

A corresponding limit may be a predefined number of times or a maximum number of times, which are not further limited herein.

Optionally, the target uplink resource may be PUCCH or PUSCH.

Optionally, in some embodiments, that a terminal obtains first information includes:
the terminal receives the first information from the control node.

Optionally, the first terminal is a terminal indicated or scheduled by the control node, and/or the second terminal is a terminal indicated or scheduled by the control node.

Optionally, in some embodiments, the terminal is the second terminal, and the method further includes:
the terminal performs a first behavior corresponding to at least two SL feedback resources; and
the terminal performs a first operation based on a result of the first behavior corresponding to an SL feedback resource; where
the first operation meets at least one of the following:
   in a case that a first behavior corresponding to a first SL feedback resource is successful, no longer performing the first behavior corresponding to a subsequent SL feedback resource of the first SL feedback resource;
   in a case that a first behavior corresponding to a first SL feedback resource is successful, determining, based on the first SL feedback resource, corresponding target uplink feedback information and/or a target uplink resource for reporting the target uplink feedback information; and
   in a case that a first behavior corresponding to a second SL feedback resource fails, continuing performing the first behavior corresponding to a subsequent SL feedback resource of the first SL feedback resource; where
   the first behavior includes monitoring, LBT, or access.

In these embodiments of this application, the following steps may be performed when the second predefined condition is met: the terminal performs the first behavior corresponding to at least two SL feedback resources; and the terminal performs the first operation based on the result of the first behavior corresponding to the SL feedback resource. The second predefined condition includes at least one of the following: the first information includes the at least two SL feedback resources, and the SL transmission resource corresponds to the at least two SL feedback resources.

Optionally, in a case that the first behavior corresponding to the second SL feedback resource fails, the first behavior corresponding to a subsequent SL feedback resource of the second SL feedback resource continues to be performed, and a limit for exiting the first behavior may also be set, for example, the first behavior will be exited until the first behavior is successful, a limit corresponding to defer is reached, a limit corresponding to access is reached, or a limit corresponding to LBT is reached.

For example, if monitoring/LBT/access is successful, the monitoring/LBT/access corresponding to the remaining SL feedback resources will not be performed; and after an SL feedback resource reaches the limit corresponding to the foregoing defer or access or LBT, corresponding target uplink feedback information and/or target uplink resource is determined based on this SL feedback resource and reported.

Optionally, in a case that the above target information is determined based on a first mapping relationship, if the first mapping relationship includes a mapping relationship between SL transmission resources and SL feedback resources, for example, one PSFCH occasion corresponds to four PSSCH occasions, meaning HARQ-ACK corresponding to these four PSSCH occasions may be fed back on this PSFCH occasion.

If the first mapping relationship includes a mapping relationship between SL feedback resources and SL transmission resources, for example, one PSSCH occasion corresponds to four PSFCH occasions, HARQ-ACK corresponding to the PSSCH may be fed back on four possible PSFCH occasions.

Optionally, in some embodiments, the target uplink feedback information includes target uplink feedback sub-information corresponding to at least part of the first predefined feedback resource, and the target uplink feedback sub-information includes at least one of the following:
HARQ-ACK information; and
information of the first behavior.

In these embodiments of this application, the information of the first behavior may include at least one of the following:
the number of monitorings (for example, listen before talks LBTs) or accesses or the maximum number of monitorings (for example, LBTs) or accesses;
the number of monitoring (for example, LBT) or access failures, or the maximum number of monitoring (for example, LBT) or access failures; and
an interval of monitoring (for example, LBT) or access successes, a maximum interval between monitoring (for example, LBT) or access successes, or a minimum interval between monitoring (for example, LBT) or access successes.

In these embodiments of this application, the number of LBTs may be understood as the number of CCAs or eCCAs or a value of an LBT counter, and the maximum number of LBTs may be understood as a maximum number of CCAs or eCCAs or a maximum value of the LBT counter.

The failures may be understood as cumulative failures or continuous failures. The number of LBT failures may be understood as the number of CCA failures or eCCA failures or the number of times a value of the LBT counter remains unchanged, and the maximum number of LBT failures may be understood as a maximum number of CCA failures or a maximum number of eCCA failures or a maximum number of times a value of the LBT counter remains unchanged.

The interval between successes may be understood as an interval between cumulative successes or an interval between continuous successes. For example, if a value of the interval is 2, the monitoring information may include the interval/maximum interval between two successful CCAs or two successful eCCAs. Alternatively, the monitoring information may include an interval between two times a value of the LBT counter (counter) decreases or the number of times a value of the counter remains unchanged, or a maximum interval or minimum interval between two times a value of the LBT counter decreases, or a maximum number of times a value of the counter remains unchanged, or minimum number of times a value of the counter remains unchanged.

Optionally, target uplink feedback sub-information corresponding to the first SL feedback resource includes any one of the following:
the hybrid automatic repeat request acknowledgment HARQ-ACK information; and
the HARQ-ACK information and the information of the first behavior.

Optionally, target uplink feedback sub-information corresponding to the first SL feedback resource includes any one of the following:
the hybrid automatic repeat request acknowledgment HARQ-ACK information; and
the HARQ-ACK information and the information of the first behavior.

Optionally, the first predefined feedback resource includes the first SL feedback resource.

Optionally, the first predefined feedback resource further includes at least one second SL feedback resource, and target uplink feedback sub-information corresponding to the second SL feedback resource is transmitted on the target uplink resource corresponding to the first SL feedback resource.

In this embodiment of this application, the target uplink feedback sub-information corresponding to the second SL feedback resource may be understood as being deferred on the target uplink resource corresponding to the first SL feedback resource for transmission.

It should be understood that, after LBT is performed for a certain resource, a method for determining report content corresponding to the resource may be specifically as follows:
1. If monitoring/LBT/access for a certain (for example, the first) SL feedback resource succeeds, the target uplink feedback information and/or the target uplink feedback sub-information corresponding to the SL feedback resource includes only target HARQ-ACK information. For example, the target uplink feedback sub-information or target HARQ-ACK information corresponding to the SL feedback resource is set as SL HARQ-ACK corresponding to the SL transmission resource corresponding to the SL feedback resource. In this way, the ability of feeding back HARQ-ACK information indicates that the LBT was definitely successful, so the result of the LBT does not need to be additionally indicated.
2. If monitoring/LBT/access for a certain (for example, the first) SL feedback resource succeeds, the target uplink feedback information and/or the target uplink feedback sub-information corresponding to the SL feedback resource includes target result information and target HARQ-ACK information. For example, the target uplink feedback sub-information or target HARQ-ACK information corresponding to the SL feedback resource is set as SL HARQ-ACK corresponding to the SL transmission resource corresponding to the SL feedback resource. Optionally, the target result information corresponding to the SL feedback resource indicates monitoring/LBT/access success. In this way, regardless of the LBT result, a composition and size of the information to be reported are fixed, thereby reducing the complexity of understanding by the control node on the information fed back by the terminal.
3. For multiple SL feedback resources, if monitoring/LBT/access for a certain SL feedback resource fails, the target uplink feedback information and/or the target uplink feedback sub-information corresponding to the SL feedback resource only includes target result information, such as information indicating monitoring/LBT/access failure. In this way, if the LBT fails, the first terminal naturally cannot determine the HARQ-ACK, so the HARQ-ACK result is not additionally indicated. This method is more suitable for a case that the first terminal reports the target uplink information.
4. For multiple SL feedback resources, if monitoring/LBT/access for a certain SL feedback resource fails, the target uplink feedback information and/or the target uplink feedback sub-information corresponding to the SL feedback resource includes target result information and target HARQ-ACK information. For example, the target uplink feedback sub-information indicates monitoring/LBT/access failure and corresponding SL HARQ-ACK. For example, the target uplink feedback sub-information indicates monitoring/LBT/access failure and NACK. In this way, regardless of the LBT result, a composition and size of the information to be reported are fixed, thereby reducing the complexity of understanding by the control node on the information fed back by the terminal.

It should be understood that, after LBT is performed for a certain resource, a method for transmitting report content corresponding to the resource may be specifically as follows:
Solution 1. If monitoring/LBT/access for a certain SL feedback resource succeeds, at least one of the following information is indicated/included in target uplink feedback sub-information corresponding to this SL feedback resource: the target uplink feedback sub-information or target HARQ-ACK information corresponding to the SL feedback resource is set to SL HARQ-ACK corresponding to an SL transmission resource corresponding to the SL feedback resource; and target result information corresponding to the SL feedback resource indicates that monitoring/LBT/access succeeds. In other words, if the monitoring/LBT/access succeeds, the target uplink feedback sub-information corresponding to the SL feedback resource indicates its own status.
Solution 2. If monitoring/LBT/access for a certain SL feedback resource fails, at least one of the following is met:
   (a) The target HARQ-ACK information and/or target result information corresponding to the SL feedback resource is deferred to a target uplink resource corresponding to another SL feedback resource (for example, the next SL feedback resource) for transmission, or in other words, the target uplink feedback sub-information corresponding to another SL feedback resource (for example, the next SL feedback resource) indicates/includes the target HARQ-ACK information and/or target result information corresponding to the SL feedback resource. Optionally, only the target HARQ-ACK information is deferred, to be specific, the target HARQ-ACK information corresponding to the SL feedback resource is transmitted on a target uplink resource (for example, the next SL feedback resource) corresponding to another SL feedback resource, for example, the second terminal decodes PSSCH1 to obtain NACK, but the second terminal fails to access PSFCH1 corresponding to PSSCH1, so the NACK is deferred to the next PSFCH2, and the NACK corresponding to PSFCH1 is transmitted in reporting information corresponding to PSFCH2. Optionally, the target HARQ-ACK information and target result information are deferred, to be specific, the target HARQ-ACK information and target result information corresponding to the SL feedback resource are transmitted on the target uplink resource corresponding to another SL feedback resource (for example, the next SL feedback resource).
   (b) The target HARQ-ACK information and target result information corresponding to the certain SL feedback resource are deferred to the target uplink resource corresponding to another SL feedback resource that has been successfully monitored/LBTed/accessed the most recent or next time for transmission, or in other words, the target uplink feedback sub-information corresponding to the SL feedback resource that has been successfully monitored/LBTed/accessed the most recent or next time indicates/includes the target HARQ-ACK information and target result information corresponding to the SL feedback resource. Optionally, only the target HARQ-ACK information is deferred, to be specific, the target HARQ-ACK information corresponding to the SL feedback resource is transmitted on a target uplink resource corresponding to an SL feedback resource that has been successfully monitored/LBTed/accessed the most recent or next time, for example, the second terminal decodes PSSCH1 to obtain NACK, but the second terminal fails to access PSFCH1 and PSFCH2 corresponding to PSSCH1, but succeeds in accessing PSFCH3, the NACK is deferred to PSFCH3, and the NACK corresponding to PSFCH1 is transmitted in reporting information corresponding to PSFCH3. Optionally, the target HARQ-ACK information and target result information are deferred, to be specific, the target HARQ-ACK information and target result information corresponding to the SL feedback resource are transmitted on a target uplink resource corresponding to an SL feedback resource that has been successfully monitored/LBTed/accessed the most recent or next time.

Optionally, the corresponding SL HARQ-ACK information and/or target HARQ-ACK information in the target uplink feedback sub-information corresponding to the SL feedback resource is set as NACK.

Optionally, the target result information corresponding to the SL feedback resource in the target uplink feedback sub-information indicates failure.

In other words, in Solution 2, if the monitoring/LBT/access fails, the target uplink feedback sub-information corresponding to a subsequent SL feedback resource needs to indicate a status of the failed SL feedback resource and a status of the subsequent SL feedback resource itself.

To better understand this application, some specific embodiments are given below for detailed description. It should be noted that in the following embodiments, COT may be understood or replaced as the first time, second time, or predefined time described above. In addition, in the following embodiments, the target uplink channel may be understood as the target uplink resource described in the embodiments above, and the target uplink channel may include PUSCH and/or PUCCH.

In some embodiments, each PSFCH corresponds to a target uplink channel.

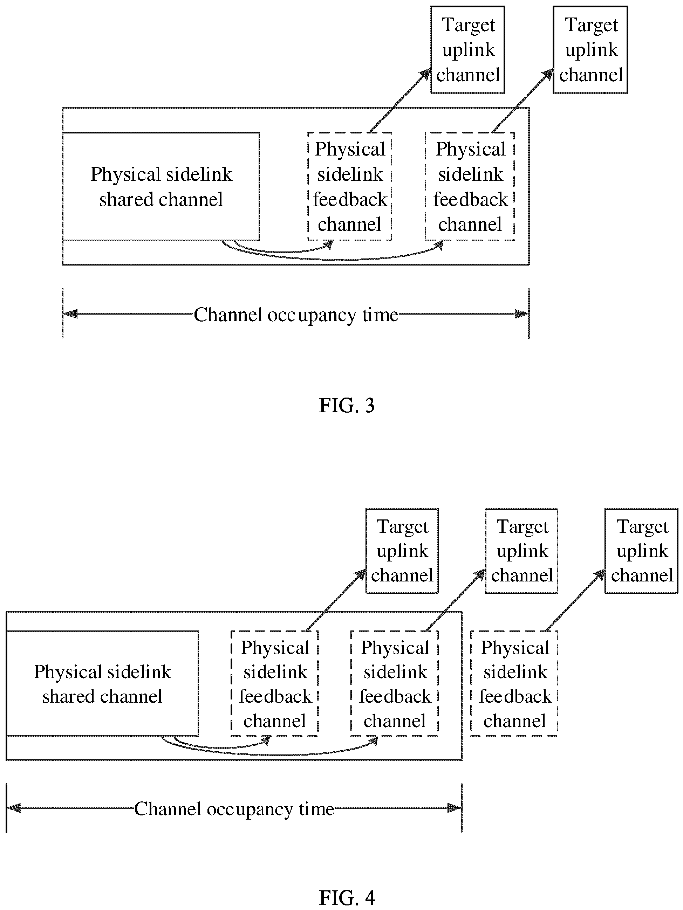

As shown in FIG. 3, the first terminal monitors and obtains a COT according to indication/scheduling of a base station. A PSSCH transmission in the COT is associated with two PSFCH occasions, and each PSFCH occasion is associated with the target uplink channel; where the PSFCH occasions may be within the COT.

As shown in FIG. 4, the first terminal monitors and obtains a COT according to indication/scheduling of a base station. A PSSCH transmission in the COT is associated with three PSFCH occasions, and each PSFCH occasion is associated with the target uplink channel; where the PSFCH occasions may be within and outside the COT.

In some embodiments, the last PSFCH corresponds to a target uplink channel.

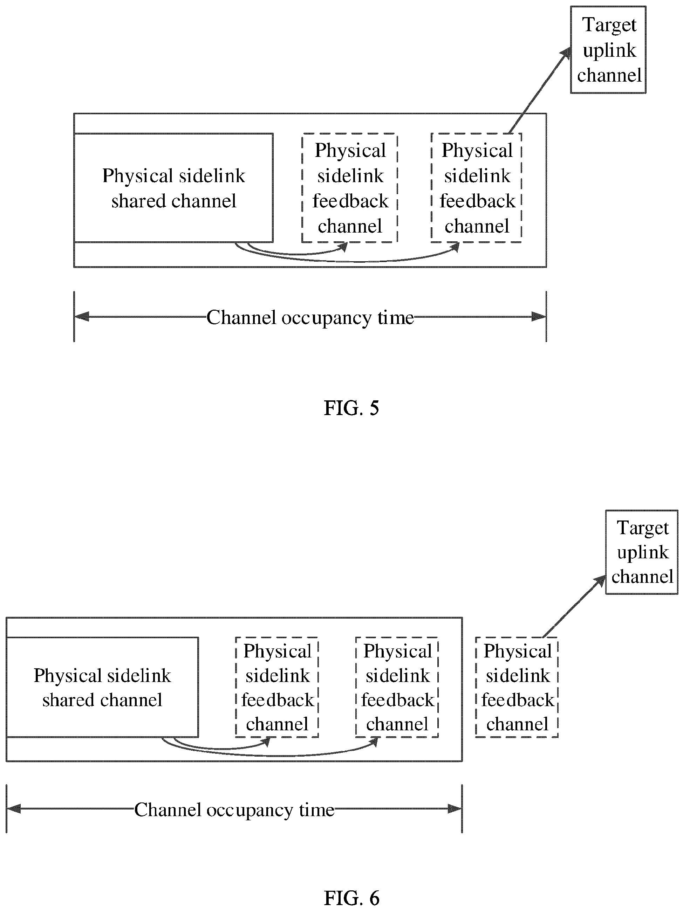

As shown in FIG. 5, the first terminal monitors and obtains a COT according to indication/scheduling of a base station. A PSSCH transmission in the COT is associated with two PSFCH occasions, and the last PSFCH occasion is associated with the target uplink channel; where the PSFCH occasions may be within the COT.

As shown in FIG. 6, the first terminal monitors and obtains a COT according to indication/scheduling of a base station. A PSSCH transmission in the COT is associated with three PSFCH occasions, and the last PSFCH occasion is associated with the target uplink channel; where the PSFCH occasions may be within or outside the COT.

In some embodiments, each PSFCH within the COT corresponds to a target uplink channel.

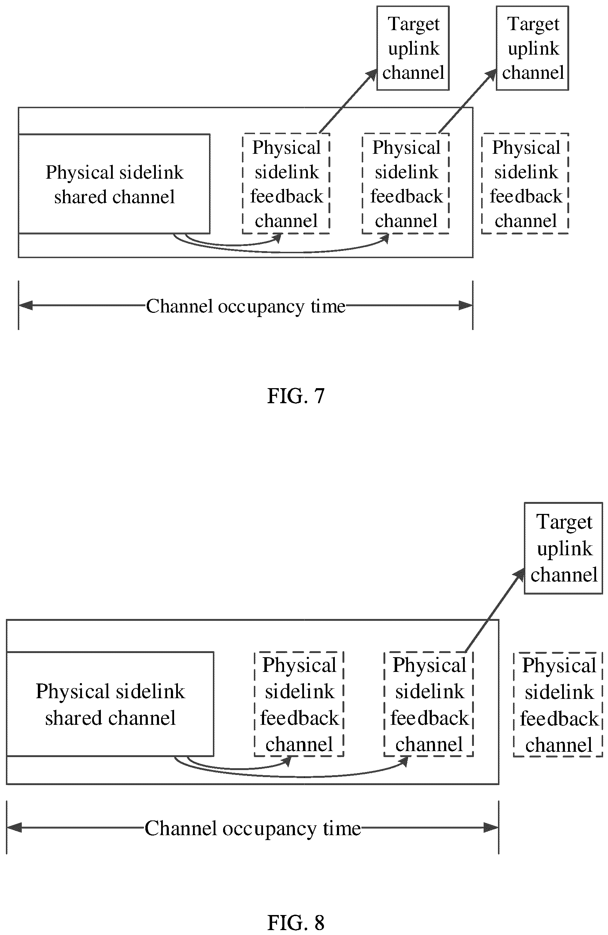

As shown in FIG. 7, the first terminal monitors and obtains a COT according to indication/scheduling of a base station. A PSSCH transmission in the COT is associated with three PSFCH occasions, and each PSFCH occasion within the COT is associated with the target uplink channel; where the three associated PSFCH occasions may be within or outside the COT.

In some embodiments, the last PSFCH within the COT corresponds to a target uplink channel.

As shown in FIG. 8, the first terminal monitors and obtains a COT according to indication/scheduling of a base station. A PSSCH transmission in the COT is associated with three PSFCH occasions, and the last PSFCH occasion within the COT is associated with the target uplink channel; where the three associated PSFCH occasions may be within or outside the COT.

In some embodiments, A position of the target uplink channel is related to a limit corresponding to LBT.

For example, if the maximum number of LBTs is limited to N, there is a corresponding target uplink channel on the N-th PSFCH occasion corresponding to a transmission.

Optionally, for example, if the maximum number of LBTs is limited to N, in PSFCH occasions corresponding to a transmission, PSFCH occasions corresponding to successful LBTs have an occasion usable for reporting the target uplink channel.

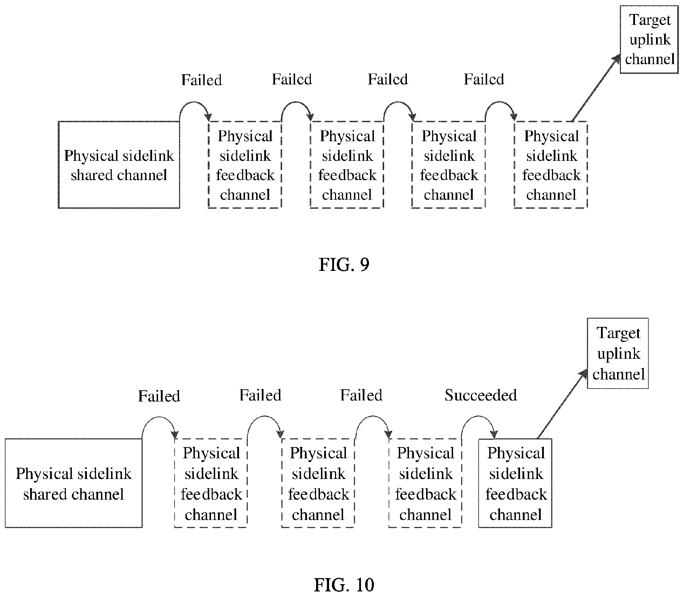

As shown in FIGs. 9 and 10, if the maximum number of LBT failures is four, there is a corresponding target uplink channel in the fourth PSFCH occasion associated with the PSSCH. Thus, regardless of whether these four PSFCH occasions are successful or failed in LBT and whether access is successful or failed, the position of the target uplink channel is determined. In FIGs. 8 and 9, a box corresponding to PSFCH is a dashed line, indicating that LBT failed, and a box corresponding to PSFCH is a solid line, indicating that LBT succeeded.

In some embodiments, DCI indicates a predefined time, that is, a time range. The target uplink channel is determined based on the end position of the time range.

For example, if the terminal receives control signaling (for example, DCI), and the DCI indicates one or more resources (a time range corresponding to the resources may be understood as a predefined time), or the DCI indicates a predefined time, the predefined time has a corresponding target uplink channel. One method is to offset based on the end position of the predefined time to obtain a position of the target uplink channel.

In some embodiments, when the DCI indicates multiple SL transmission resources and/or SL feedback resources and/or predefined times, each SL transmission resource and/or SL feedback resource and/or specific time corresponds to one target uplink channel.

For example, if the terminal receives control signaling (for example, DCI), and the DCI indicates two groups of resources or two resources (time ranges corresponding to the two groups of resources or two resources may be understood as predefined time 1 and predefined time 2), or the DCI indicates two predefined times, each specific time has one corresponding target uplink channel.

In this case, the position of the target uplink channel is obtained by offsetting based on the end position of the predefined time.

Alternatively, a predefined time in the two predefined times, such as the last specific time, has one corresponding target uplink channel. In this case, the position of the target uplink channel is obtained by offsetting based on the end position of predefined time 2.

In some embodiments, feedback may be performed after deferment.

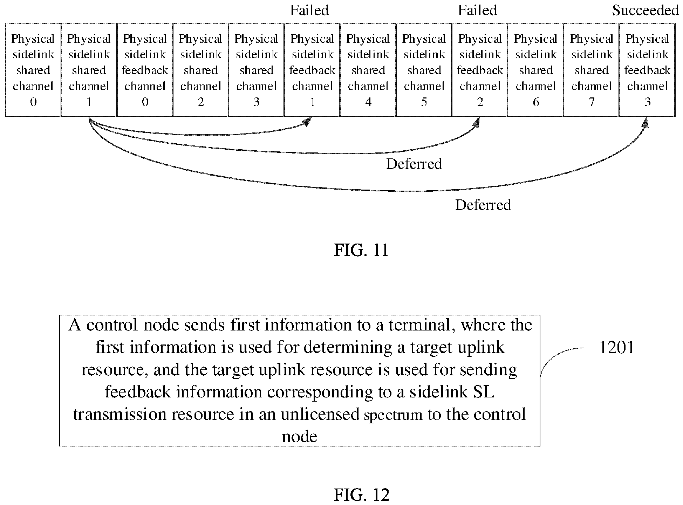

As shown in FIG. 11, PSSCH0 and PSSCH1 are associated with PSFCH1, PSSCH2 and PSSCH3 are associated with PSFCH2, and PSSCH4 and PSSCH5 are associated with PSFCH3. Furthermore, PSFCH1, PSFCH2, and PSFCH3 are all PSFCHs (also referred to as PSFCH candidates, that is, the SL feedback resources or SL feedback resource candidates described above) corresponding to PSSCH1, which may be understood as: the PSFCHs corresponding to PSSCH1 include PSFCH1, PSFCH2, and PSFCH3. The association between PSSCHs and PSFCHs may be interpreted as the earliest SL HARQ-ACK corresponding to PSSCH may be transmitted on an associated PSFCH of the PSSCH. The association between PSSCH and PSFCH candidates may be interpreted as the SL HARQ-ACK corresponding to PSSCH may be transmitted on a corresponding PSFCH candidate, and/or target HARQ-ACK information corresponding to PSSCH may be transmitted on a corresponding target uplink channel corresponding to a PSFCH candidate.

If the terminal fails to access PSFCH1 and PSFCH2 but successfully accesses PSFCH3, there will be at least 6-bit HARQ-ACK information corresponding to PSFCH3 or the target uplink channel corresponding to PSFCH3, respectively indicating HARQ-ACK statuses of PSFCH0 to PSFCH5.

Furthermore, target result information corresponding to PSFCH3 may also indicate the monitoring/LBT/access results of PSFCH1, PSFCH2, and PSFCH3.

Referring to FIG. 12, an embodiment of this application further provides a sidelink feedback processing method. As shown in FIG. 12, the sidelink feedback processing method includes the following step.

Step 1201: A control node sends first information to a terminal, where the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

Optionally, the first predefined transmission resource includes at least one of the following: any SL transmission resource; each SL transmission resource; the A-th SL transmission resource, A being a positive integer; an SL transmission resource at a predefined time-domain position; an SL transmission resource corresponding to a predefined number; the last SL transmission resource among SL transmission resources corresponding to the same SL feedback resources; an SL transmission resource corresponding to a predefined number of defers; an SL transmission resource corresponding to reaching a limit corresponding to defer, access, or listen before talk LBT; the first SL transmission resource after successful access; and the first SL transmission resource after successful LBT.

Optionally, the first predefined transmission resource is within a first time, and the first time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, a time before obtaining occupancy, a time after successful access, and a time corresponding to failed access.

Optionally, the predefined time meets at least one of the following:
the predefined time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy;
the predefined time includes a first time, the first time being associated with the first predefined transmission resource;
the predefined time includes a second time, the second time being associated with the first predefined feedback resource;
the predefined time is an SL configured grant CG period; and
the predefined time is associated with the target uplink resource.

Optionally, the target control signaling is associated with the target uplink resource.

Optionally, the terminal is any one of the following: a first terminal, a second terminal, and a third terminal, where the first terminal is a terminal performing transmission or reception on the SL transmission resource, the second terminal is a peer communicating with the first terminal, and the third terminal is a terminal other than the first terminal and the second terminal.

Optionally, the first terminal is a terminal indicated or scheduled by the control node, and/or the second terminal is a terminal indicated or scheduled by the control node.

The sidelink feedback processing method according to this embodiment of this application may be executed by a sidelink feedback processing apparatus. In this embodiment of this application, the sidelink feedback processing method executed by a sidelink feedback processing apparatus is used as an example to describe the sidelink feedback processing apparatus according to the embodiments of this application.

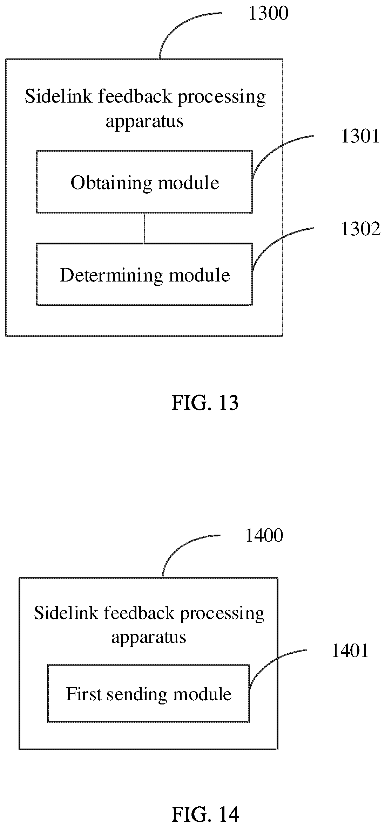

Referring to FIG. 13, an embodiment of this application further provides a sidelink feedback processing apparatus. As shown in FIG. 13, the sidelink feedback processing apparatus 1300 includes:
an obtaining module 1301, configured to obtain first information; and
a determining module 1302, configured to determine a target uplink resource based on the first information, where the target uplink resource is used for sending feedback information corresponding to a sidelink SL transmission resource in an unlicensed band to a control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

Optionally, the first predefined transmission resource includes at least one of the following: any SL transmission resource; each SL transmission resource; the A-th SL transmission resource, A being a positive integer; an SL transmission resource at a predefined time-domain position; an SL transmission resource corresponding to a predefined number; the last SL transmission resource among SL transmission resources corresponding to the same SL feedback resources; an SL transmission resource corresponding to a predefined number of defers; an SL transmission resource corresponding to reaching a limit corresponding to defer, access, or listen before talk LBT; the first SL transmission resource after successful access; and the first SL transmission resource after successful LBT.

Optionally, the first predefined transmission resource is within a first time, and the first time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, a time before obtaining occupancy, a time after successful access, and a time corresponding to failed access.

Optionally, in a case that the first information includes the first predefined transmission resource, the determining module 1302 is specifically configured to determine a target uplink resource corresponding to each SL transmission resource in the first predefined transmission resource according to an association relationship between each SL transmission resource in the first predefined transmission resource and the target uplink resource.

Optionally, in a case that the first information includes the first predefined feedback resource, the determining module 1302 is specifically configured to perform any one of the following:
determining, according to an association relationship between each SL feedback resource in T SL feedback resources and a target uplink resource, the target uplink resource corresponding to each SL feedback resource in the T SL feedback resources, where T is a positive integer, the T SL feedback resources are feedback resources indicated, configured, pre-configured, or scheduled to the terminal, or feedback resources obtained by the terminal through autonomous determination or monitoring, and the T SL feedback resources include the first predefined feedback resource; and
determining the target uplink resource based on a target feedback resource in the first predefined feedback resource; where
the target feedback resource includes at least one of the following: any SL feedback resource; each SL feedback resource; the B-th SL feedback resource, B being a positive integer; an SL feedback resource at a predefined time-domain position; an SL feedback resource corresponding to a predefined number; the last SL feedback resource among SL feedback resources corresponding to a same SL feedback resource; an SL feedback resource corresponding to a predefined number of defers; an SL feedback resource corresponding to reaching a limit corresponding to defer, access, or LBT; the first SL feedback resource after successful access; and the first SL feedback resource after successful LBT.

Optionally, the first predefined feedback resource includes an SL feedback resource within a second time; where
the second time includes one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy.

Optionally, the first predefined feedback resource has an SL feedback resources outside the second time, and the SL feedback resource outside the second time is associated with the target uplink resource; where
the second time includes one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy.

Optionally, the SL feedback resource within the second time is associated with the target uplink resource, or the target feedback resource within the SL feedback resource within the second time is associated with the target uplink resource.

Optionally, the predefined time meets at least one of the following:
the predefined time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy;
the predefined time includes a first time, the first time being associated with the first predefined transmission resource;
the predefined time includes a second time, the second time being associated with the first predefined feedback resource;
the predefined time is an SL configured grant CG period; and
the predefined time is associated with the target uplink resource.

Optionally, the target control signaling is associated with the target uplink resource.

Optionally, the determining module 1302 is specifically configured to perform at least one of the following:
determining a position of the target uplink resource based on a position offset from a first position or a second position;
determining a position of the target uplink resource based on an uplink resource position associated with a first position, and/or determining a format of the target uplink resource based on an uplink resource format associated with the first position; and
determining a position of the target uplink resource based on an uplink resource position associated with the predefined time or target control signaling, and/or determining a format of the target uplink resource based on an uplink resource format associated with the predefined time or target control signaling; where
the first position is a position of the first predefined transmission resource, and the second position is a position of the first predefined feedback resource.

Optionally, the offset value of the position offset is associated with at least one of an access interval, the number of accesses, an access duration, an access type, an LBT interval, the number of LBTs, an LBT duration, and an LBT type.

Optionally, the sidelink feedback processing apparatus 1300 further includes:
a second sending module, configured to send second information on a target uplink resource meeting a first predefined condition, where the second information includes feedback information of the SL transmission resource; and
the first predefined condition includes at least one of the following:
   an SL transmission resource corresponding to the target uplink resource is successfully accessed, LBT for an SL transmission resource corresponding to the target uplink resource is succeeded, or an SL transmission resource corresponding to the target uplink resource is usable, by at least one terminal;
   an SL feedback resource corresponding to the target uplink resource is successfully accessed, LBT for an SL feedback resource corresponding to the target uplink resource is succeeded, or an SL feedback resource corresponding to the target uplink resource is usable, by at least one terminal;
   being the last uplink resource among determined multiple target uplink resources;
   being an SL feedback resource corresponding to the target uplink resource in a case that a limit corresponding to defer, access, or LBT is reached;
   being an SL transmission resource corresponding to the target uplink resource in a case that a limit corresponding to defer, access, or LBT is reached; and
   being a target uplink resource in a case that a limit corresponding to defer, access, or LBT is reached.

Optionally, the obtaining module 1301 is specifically receive the first information from the control node.

Optionally, the terminal is any one of the following: a first terminal, a second terminal, and a third terminal, where the first terminal is a terminal performing transmission or reception on the SL transmission resource, the second terminal is a peer communicating with the first terminal, and the third terminal is a terminal other than the first terminal and the second terminal.

Optionally, the first terminal is a terminal indicated or scheduled by the control node, and/or the second terminal is a terminal indicated or scheduled by the control node.

Optionally, the terminal is the second terminal, and the sidelink feedback processing apparatus further includes:
an execution module, configured to perform a first behavior corresponding to at least two SL feedback resources; and perform a first operation based on a result of the first behavior corresponding to an SL feedback resource; where
the first operation meets at least one of the following:
   in a case that a first behavior corresponding to a first SL feedback resource is successful, no longer performing the first behavior corresponding to a subsequent SL feedback resource of the first SL feedback resource;
   in a case that a first behavior corresponding to a first SL feedback resource is successful, determining, based on the first SL feedback resource, corresponding target uplink feedback information and/or a target uplink resource for reporting the target uplink feedback information; and
   in a case that a first behavior corresponding to a second SL feedback resource fails, continuing performing the first behavior corresponding to a subsequent SL feedback resource of the first SL feedback resource; where
   the first behavior includes monitoring, LBT, or access.

Optionally, the target uplink feedback information includes target uplink feedback sub-information corresponding to at least part of the first predefined feedback resource, and the target uplink feedback sub-information includes at least one of the following:
hybrid automatic repeat request acknowledgment HARQ-ACK information; and
information of the first behavior.

Optionally, target uplink feedback sub-information corresponding to the first SL feedback resource includes any one of the following:
the HARQ-ACK information; and
the HARQ-ACK information and the information of the first behavior.

Optionally, target uplink feedback sub-information corresponding to the second SL feedback resource includes any one of the following:
the information of the first behavior; and
the HARQ-ACK information and the information of the first behavior.

Optionally, the first predefined feedback resource includes the first SL feedback resource.

Optionally, the first predefined feedback resource further includes at least one second SL feedback resource, and target uplink feedback sub-information corresponding to the second SL feedback resource is transmitted on the target uplink resource corresponding to the first SL feedback resource.

Referring to FIG. 14, an embodiment of this application further provides a sidelink feedback processing apparatus. As shown in FIG. 14, the sidelink feedback processing apparatus 1400 includes:
a first sending module 1401, configured to send first information to a terminal, where the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

Optionally, the first predefined transmission resource includes at least one of the following: any SL transmission resource; each SL transmission resource; the A-th SL transmission resource, A being a positive integer; an SL transmission resource at a predefined time-domain position; an SL transmission resource corresponding to a predefined number; the last SL transmission resource among SL transmission resources corresponding to the same SL feedback resources; an SL transmission resource corresponding to a predefined number of defers; an SL transmission resource corresponding to reaching a limit corresponding to defer, access, or listen before talk LBT; the first SL transmission resource after successful access; and the first SL transmission resource after successful LBT.

Optionally, the first predefined transmission resource is within a first time, and the first time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, a time before obtaining occupancy, a time after successful access, and a time corresponding to failed access.

Optionally, the predefined time meets at least one of the following:
the predefined time includes at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy;
the predefined time includes a first time, the first time being associated with the first predefined transmission resource;
the predefined time includes a second time, the second time being associated with the first predefined feedback resource;
the predefined time is an SL configured grant CG period; and
the predefined time is associated with the target uplink resource.

Optionally, the target control signaling is associated with the target uplink resource.

Optionally, the terminal is any one of the following: a first terminal, a second terminal, and a third terminal, where the first terminal is a terminal performing transmission or reception on the SL transmission resource, the second terminal is a peer communicating with the first terminal, and the third terminal is a terminal other than the first terminal and the second terminal.

Optionally, the first terminal is a terminal indicated or scheduled by the control node, and/or the second terminal is a terminal indicated or scheduled by the control node.

The sidelink feedback processing apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The sidelink feedback processing apparatus provided in this embodiment of this application can implement the processes implemented by the method embodiment in FIG. 2 to FIG. 12, with the same technical effects achieved. To avoid repetition, details are not described herein again.

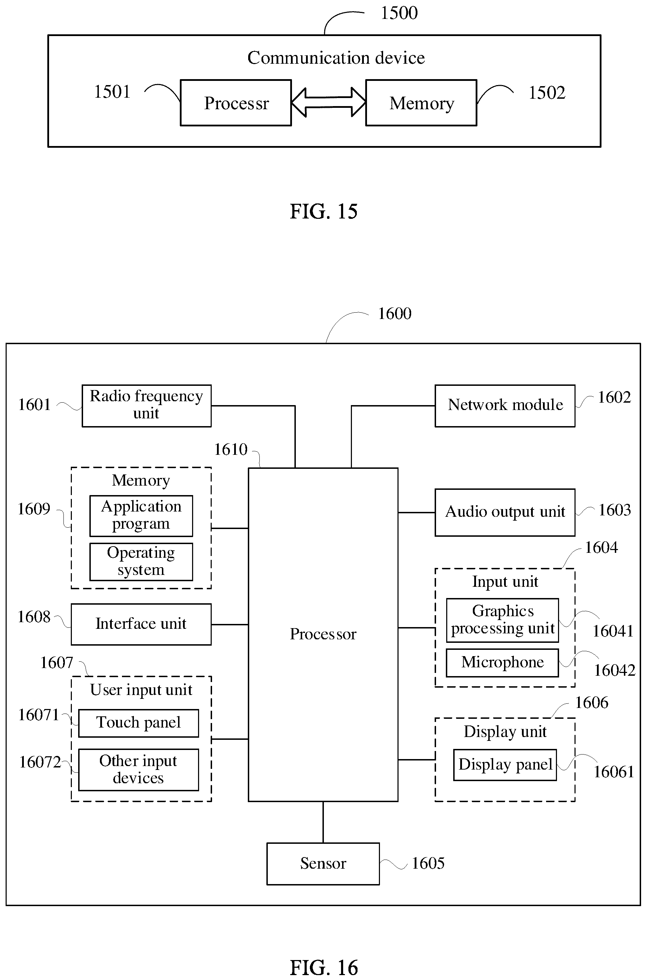

Optionally, as shown in FIG. 15, the embodiment of this application also provides a communication device 1500, including a processor 1501 and a memory 1502, where the memory 1502 stores a program or instructions that can run on the processor 1501, and when the program or instructions are executed by the processor 1501, the steps of the foregoing sidelink feedback processing method embodiments are implemented, and the same technical effects can be achieved. To avoid repetition, the details are not repeated here.

An embodiment of this application further provides a terminal, including a processor and a communication interface, where the communication interface is configured to obtain first information; and the processor is configured to determine a target uplink resource based on the first information, where the target uplink resource is used for sending feedback information corresponding to a sidelink SL transmission resource in an unlicensed band to a control node; and the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource; or
when the terminal is a control node, the communication interface is configured to send first information to the terminal, where the first information is used for determining a target uplink resource, the target uplink resource is used for sending feedback information corresponding to a sidelink SL transmission resource in an unlicensed band to the control node; and the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

This terminal embodiment corresponds to the foregoing method embodiment on the terminal side. All implementations in the foregoing method embodiment may be applicable to this terminal embodiment, with the same technical effects achieved. Specifically, FIG. 15 is a schematic structural diagram of hardware of a terminal for implementing embodiments of this application.

The terminal 1600 includes, but is not limited to, at least some of components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

Persons skilled in the art can understand that the terminal 1600 may further include a power supply (for example, a battery) for supplying power to the components. The power supply may be logically connected to the processor 1610 through a power management system. In this way, functions such as charge management, discharge management, and power consumption management are implemented by using the power management system. The structure of the terminal shown in FIG. 16 does not constitute any limitation on the terminal. The terminal may include more or fewer components than shown in the figure, or a combination of some components, or the components disposed differently. Details are not described herein again.

It should be understood that in this embodiment of this application, the input unit 1604 may include a graphics processing unit (Graphics Processing Unit, GPU) 16041 and a microphone 16042. The graphics processing unit 16041 processes image data of a static picture or a video that is obtained by an image capture apparatus (for example, a camera) in a video capture mode or an image capture mode. The display unit 1606 may include a display panel 16061, and the display panel 16061 may be configured in a form of a liquid crystal display, an organic light-emitting diode, and the like. The user input unit 1607 includes at least one of a touch panel 16071 and other input devices 16072. The touch panel 16071 is also referred to as a touchscreen. The touch panel 16071 may include two parts: a touch detection apparatus and a touch controller. The other input devices 16072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 1601 may transmit the downlink data to the processor 1610 for processing. In addition, the radio frequency unit 1601 may transmit uplink data to the network-side device. Generally, the radio frequency unit 1601 includes but is not limited to an antenna, an amplifier, a transceiver, a coupler, a low noise amplifier, and a duplexer.

The memory 1609 may be configured to store software programs or instructions and various data. The memory 1609 may include first storage area for storing programs or instructions and a second storage area for storing data. The first storage area may store an operating system, an application program or instruction required by at least one function (for example, a sound playback function or an image playback function), and the like. In addition, the memory 1609 may include either a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 1609 in this embodiment of this application includes but is not limited to these and any other suitable types of memories.

The processor 1610 may include one or more processing units. Optionally, an application processor and a modem processor are integrated in the processor 1610. The application processor primarily processes operations relating to an operating system, user interfaces, application programs, and the like. The modem processor primarily processes radio communication signals, for example, being a baseband processor. It can be understood that the modem processor may alternatively be not integrated in the processor 1610.

The radio frequency unit 1601 is configured to obtain first information; and
the processor 1610 is configured to determine a target uplink resource based on the first information, where the target uplink resource is used for sending feedback information corresponding to a sidelink SL transmission resource in an unlicensed band to a control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource; or
when the terminal is a control node, the radio frequency unit 1601 is configured to send first information to a terminal, where the first information is used for determining a target uplink resource, and the target uplink resource is used for sending feedback information corresponding to a sidelink SL transmission resource in an unlicensed band to the control node; and
the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource.

An embodiment of this application further provides a network-side device, including a processor and a communication interface, where the communication interface is configured to send first information to a terminal; where the first information is used for determining a target uplink resource; the target uplink resource is used for sending feedback information corresponding to a sidelink SL transmission resource in an unlicensed band to a control node; and the first information includes a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time includes a time range corresponding to the first predefined transmission resource, the first predefined transmission resource includes at least one SL transmission resource, and the first predefined feedback resource includes at least one SL feedback resource. The network-side device embodiment corresponds to the foregoing network-side device method embodiment. All implementations in the foregoing method embodiment may be applicable to the network-side device embodiment, with the same technical effect achieved.

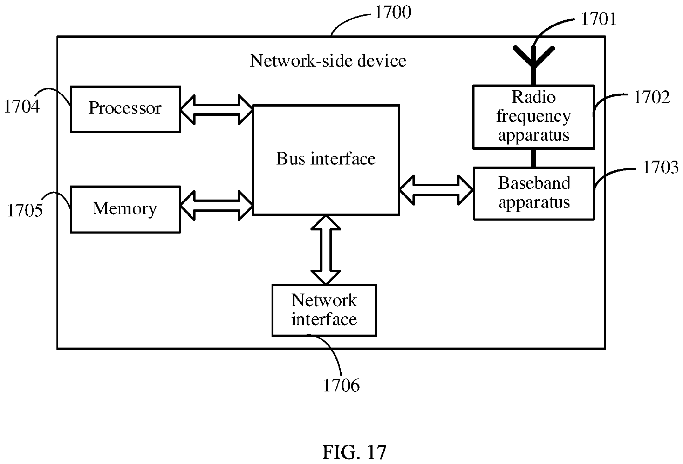

Specifically, an embodiment of this application further provides a network-side device. As shown in FIG. 17, the network-side device 1700 includes: an antenna 1701, a radio frequency apparatus 1702, a baseband apparatus 1703, a processor 1704, and a memory 1705. The antenna 1701 is connected to the radio frequency apparatus 1702. In an uplink direction, the radio frequency apparatus 1702 receives information using the antenna 1701, and sends the received information to the baseband apparatus 1703 for processing. In a downlink direction, the baseband apparatus 1703 processes to-be-sent information, and sends the information to the radio frequency apparatus 1702; and the radio frequency apparatus 1702 processes the received information and then sends the information using the antenna 1701.

The method performed by the network-side device in the foregoing embodiment may be implemented in the baseband apparatus 1703, and the baseband apparatus 1703 includes a baseband processor.

The baseband apparatus 1703 may include, for example, at least one baseband board, where a plurality of chips are disposed on the baseband board. As shown in FIG. 17, one of the chips is, for example, the baseband processor, and connected to the memory 1705 through a bus interface, to invoke the program in the memory 1705 to perform the operations of the network device shown in the foregoing method embodiment.

The network-side device may further include a network interface 1706, where the interface is, for example, a common public radio interface (common public radio interface, CPRI).

Specifically, the network-side device 1700 in this embodiment of the present invention further includes a program or instructions stored in the memory 1705 and capable of running on the processor 1704. The processor 1704 invokes the program or instructions in the memory 1705 to execute the methods executed by the modules shown in FIG. 13, with the same technical effect achieved. To avoid repetition, details are not described herein again.

An embodiment of this application further provides a readable storage medium, where a program or an instruction is stored in the readable storage medium, and when the program or instruction is executed by a processor, the processes of the foregoing sidelink feedback processing method embodiment can be implemented, with same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement the processes of the foregoing sidelink feedback processing method embodiments, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing sidelink feedback processing method embodiments, with the same technical effects achieved. To avoid repetition, details are not described herein again.

An embodiment of this application further provides a communication system, including: a terminal and a control node, where the terminal is configured to perform the processes of the terminal-side method embodiments shown in FIG. 2 and described above, and the control node is configured to perform the processes of the control node-side method embodiments shown in FIG. 11 and described above, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A sidelink feedback processing method, comprising:
obtaining, by a terminal, first information; and
determining, by the terminal, a target uplink resource based on the first information, wherein the target uplink resource is used for sending feedback information corresponding to a sidelink SL transmission resource in an unlicensed band to a control node; and
the first information comprises a first predefined transmission resource, a first predefined feedback resource, a predefined time, and target control signaling, wherein the target control signaling is used for configuring, indicating, or scheduling at least one of the SL transmission resource, an SL feedback resource, and the predefined time, the predefined time comprises a time range corresponding to the first predefined transmission resource, the first predefined transmission resource comprises at least one SL transmission resource, and the first predefined feedback resource comprises at least one SL feedback resource.

2. The method according to claim 1, wherein the first predefined transmission resource comprises at least one of the following: any SL transmission resource; each SL transmission resource; the A-th SL transmission resource, A being a positive integer; an SL transmission resource at a predefined time-domain position; an SL transmission resource corresponding to a predefined number; the last SL transmission resource among SL transmission resources corresponding to a same SL feedback resource; an SL transmission resource corresponding to a predefined number of defers; an SL transmission resource corresponding to reaching a limit corresponding to defer, access, or listen before talk LBT; the first SL transmission resource after successful access; and the first SL transmission resource after successful LBT.

3. The method according to claim 1, wherein the first predefined transmission resource is within a first time, and the first time comprises at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, a time before obtaining occupancy, a time after successful access, and a time corresponding to failed access.

4. The method according to claim 1, wherein in a case that the first information comprises the first predefined transmission resource, the determining, by the terminal, a target uplink resource based on the first information comprises:
determining, by the terminal, a target uplink resource corresponding to each SL transmission resource in the first predefined transmission resource according to an association relationship between each SL transmission resource in the first predefined transmission resource and the target uplink resource.

5. The method according to claim 1, wherein in a case that the first information comprises the first predefined feedback resource, the determining, by a terminal, a target uplink resource based on the first information comprises any one of the following:
determining, by the terminal according to an association relationship between each SL feedback resource in T SL feedback resources and a target uplink resource, the target uplink resource corresponding to each SL feedback resource in the T SL feedback resources, wherein T is a positive integer, the T SL feedback resources are feedback resources indicated, configured, pre-configured, or scheduled to the terminal, or feedback resources obtained by the terminal through independent determination or monitoring, and the T SL feedback resources comprise the first predefined feedback resource; and
determining, by the terminal, the target uplink resource based on a target feedback resource in the first predefined feedback resource; wherein
the target feedback resource comprises at least one of the following: any SL feedback resource; each SL feedback resource; the B-th SL feedback resource, B being a positive integer; an SL feedback resource at a predefined time-domain position; an SL feedback resource corresponding to a predefined number; the last SL feedback resource among SL feedback resources corresponding to a same SL feedback resource; an SL feedback resource corresponding to a predefined number of defers; an SL feedback resource corresponding to reaching a limit corresponding to defer, access, or LBT; the first SL feedback resource after successful access; and the first SL feedback resource after successful LBT.

6. The method according to claim 5, wherein the first predefined feedback resource comprises an SL feedback resource within a second time; wherein
the second time comprises one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy.

7. The method according to claim 5, wherein the first predefined feedback resource has an SL feedback resources outside the second time, and the SL feedback resource outside the second time is associated with the target uplink resource; wherein
the second time comprises one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy.

8. The method according to claim 6, wherein the SL feedback resource within the second time is associated with the target uplink resource, or the target feedback resource within the SL feedback resource within the second time is associated with the target uplink resource.

9. The method according to claim 1, wherein the predefined time meets at least one of the following:
the predefined time comprises at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy;
the predefined time comprises a first time, the first time being associated with the first predefined transmission resource;
the predefined time comprises a second time, the second time being associated with the first predefined feedback resource;
the predefined time is an SL configured grant CG period; and
the predefined time is associated with the target uplink resource.

10. The method according to claim 1, wherein the target control signaling is associated with the target uplink resource.

11. The method according to claim 1, wherein the determining, by the terminal, a target uplink resource based on the first information comprises at least one of the following:
determining, by the terminal, a position of the target uplink resource based on a position offset from a first position or a second position;
determining, by the terminal, a position of the target uplink resource based on an uplink resource position associated with a first position, and/or determining, by the terminal, a format of the target uplink resource based on an uplink resource format associated with the first position; and
determining, by the terminal, a position of the target uplink resource based on an uplink resource position associated with the predefined time or target control signaling, and/or determining, by the terminal, a format of the target uplink resource based on an uplink resource format associated with the predefined time or target control signaling; wherein
the first position is a position of the first predefined transmission resource, and the second position is a position of the first predefined feedback resource.

12. The method according to claim 11, wherein the offset value of the position offset is associated with at least one of an access interval, the number of accesses, an access duration, an access type, an LBT interval, the number of LBTs, an LBT duration, and an LBT type.

13. The method according to claim 1, where the method further includes:
sending, by the terminal, second information on a target uplink resource meeting a first predefined condition, wherein the second information comprises feedback information of the SL transmission resource; and
the first predefined condition comprises at least one of the following:
an SL transmission resource corresponding to the target uplink resource is successfully accessed, LBT for an SL transmission resource corresponding to the target uplink resource is succeeded, or an SL transmission resource corresponding to the target uplink resource is usable, by at least one terminal;
an SL feedback resource corresponding to the target uplink resource is successfully accessed, LBT for an SL feedback resource corresponding to the target uplink resource is succeeded, or an SL feedback resource corresponding to the target uplink resource is usable, by at least one terminal;
being the last uplink resource among determined multiple target uplink resources;
being an SL feedback resource corresponding to the target uplink resource in a case that a limit corresponding to defer, access, or LBT is reached;
being an SL transmission resource corresponding to the target uplink resource in a case that a limit corresponding to defer, access, or LBT is reached; and
being a target uplink resource in a case that a limit corresponding to defer, access, or LBT is reached.

14. The method according to claim 1, wherein the obtaining, by a terminal, first information comprises:
receiving, by the terminal, the first information from the control node.

15. The method according to claim 1, wherein the terminal is any one of the following: a first terminal, a second terminal, and a third terminal, wherein the first terminal is a terminal performing transmission or reception on the SL transmission resource, the second terminal is a peer communicating with the first terminal, and the third terminal is a terminal other than the first terminal and the second terminal.

16. The method according to claim 15, wherein the first terminal is a terminal indicated or scheduled by the control node, and/or the second terminal is a terminal indicated or scheduled by the control node.

17. The method according to claim 15, wherein in a case that the terminal is the second terminal, the method further comprises:
performing, by the terminal, a first behavior corresponding to at least two SL feedback resources; and
performing, by the terminal, a first operation based on a result of the first behavior corresponding to an SL feedback resource; wherein
the first operation meets at least one of the following:
in a case that a first behavior corresponding to a first SL feedback resource is successful, no longer performing the first behavior corresponding to a subsequent SL feedback resource of the first SL feedback resource;
in a case that a first behavior corresponding to a first SL feedback resource is successful, determining, based on the first SL feedback resource, corresponding target uplink feedback information and/or a target uplink resource for reporting the target uplink feedback information; and
in a case that a first behavior corresponding to a second SL feedback resource fails, continuing performing the first behavior corresponding to a subsequent SL feedback resource of the first SL feedback resource; wherein
the first behavior comprises monitoring, LBT, or access.

18. The method according to claim 17, wherein the target uplink feedback information comprises target uplink feedback sub-information corresponding to at least part of the first predefined feedback resource, and the target uplink feedback sub-information comprises at least one of the following:
hybrid automatic repeat request acknowledgment HARQ-ACK information; and
information of the first behavior.

19. The method according to claim 18, wherein target uplink feedback sub-information corresponding to the first SL feedback resource comprises any one of the following:
the HARQ-ACK information; and
the HARQ-ACK information and the information of the first behavior.

20. The method according to claim 18, wherein target uplink feedback sub-information corresponding to the second SL feedback resource comprises any one of the following:
the information of the first behavior; and
the HARQ-ACK information and the information of the first behavior.

21. The method according to claim 17, wherein the first predefined feedback resource comprises the first SL feedback resource.

22. The method according to claim 21, wherein the first predefined feedback resource further comprises at least one second SL feedback resource, and the target uplink feedback sub-information corresponding to the second SL feedback resource is transmitted on the target uplink resource corresponding to the first SL feedback resource.

23. A sidelink feedback processing method, comprising:
sending, by a control node, first information to a terminal, wherein the first information is used for determining a target uplink resource, and the target uplink resource is used for sending feedback information corresponding to a sidelink SL transmission resource in an unlicensed band to the control node; and
the first information comprises a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time comprises a time range corresponding to the first predefined transmission resource, the first predefined transmission resource comprises at least one SL transmission resource, and the first predefined feedback resource comprises at least one SL feedback resource.

24. The method according to claim 23, wherein the first predefined transmission resource comprises at least one of the following: any SL transmission resource; each SL transmission resource; the A-th SL transmission resource, A being a positive integer; an SL transmission resource at a predefined time-domain position; an SL transmission resource corresponding to a predefined number; the last SL transmission resource among SL transmission resources corresponding to the same SL feedback resources; an SL transmission resource corresponding to a predefined number of defers; an SL transmission resource corresponding to reaching a limit corresponding to defer, access, or listen before talk LBT; the first SL transmission resource after successful access; and the first SL transmission resource after successful LBT.

25. The method according to claim 23, wherein the first predefined transmission resource is within a first time, and the first time comprises at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, a time before obtaining occupancy, a time after successful access, and a time corresponding to failed access.

26. The method according to claim 23, wherein the predefined time meets at least one of the following:
the predefined time comprises at least one of the following: an occasion of at least one resource, an occasion of at least one group of resources, a time-domain resource, a time-domain range, a frequency-domain resource, a frequency-domain range, a range or resource corresponding to a timer, a range or resource corresponding to a counter, a time corresponding to obtained occupancy, and a time before obtaining occupancy;
the predefined time comprises a first time, the first time being associated with the first predefined transmission resource;
the predefined time comprises a second time, the second time being associated with the first predefined feedback resource;
the predefined time is an SL configured grant CG period; and
the predefined time is associated with the target uplink resource.

27. The method according to claim 23, wherein the target control signaling is associated with the target uplink resource.

28. The method according to claim 23, wherein the terminal is any one of the following: a first terminal, a second terminal, and a third terminal, wherein the first terminal is a terminal performing transmission or reception on the SL transmission resource, the second terminal is a peer communicating with the first terminal, and the third terminal is a terminal other than the first terminal and the second terminal.

29. The method according to claim 28, wherein the first terminal is a terminal indicated or scheduled by the control node, and/or the second terminal is a terminal indicated or scheduled by the control node.

30. A sidelink feedback processing apparatus, comprising:
an obtaining module, configured to obtain first information; and
a determining module, configured to determine a target uplink resource based on the first information, wherein the target uplink resource is used for sending feedback information corresponding to a sidelink SL transmission resource in an unlicensed band to a control node; and
the first information comprises a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time comprises a time range corresponding to the first predefined transmission resource, the first predefined transmission resource comprises at least one SL transmission resource, and the first predefined feedback resource comprises at least one SL feedback resource.

31. A sidelink feedback processing apparatus, comprising:
a first sending module, configured to send first information to a terminal, wherein the first information is used for determining a target uplink resource, and the target uplink resource is used for sending feedback information corresponding to a sidelink SL transmission resource in an unlicensed band to the control node; and
the first information comprises a first predefined transmission resource, a first predefined feedback resource, a predefined time, and target control signaling, the target control signaling is used for configuring, indicating, or scheduling at least one of the SL transmission resource, the SL feedback resource, and the predefined time, the predefined time comprises a time range corresponding to the first predefined transmission resource, the first predefined transmission resource comprises at least one SL transmission resource, and the first predefined feedback resource comprises at least one SL feedback resource.

32. A terminal, comprising a processor and a memory, wherein the memory stores a program or instructions capable of running on the processor, and when the program or instructions are executed by the processor, the steps of the sidelink feedback processing method according to any one of claims 1 to 29 are implemented.

33. A network-side device, comprising a processor and a memory, wherein the memory stores a program or instructions capable of running on the processor, and when the program or instructions are executed by the processor, the steps of the sidelink feedback processing method according to any one of claims 23 to 29 are implemented.

34. A readable storage medium, wherein the readable storage medium stores a program or instructions, and when the program or instructions are executed by a processor, the steps of the sidelink feedback processing method according to any one of claims 1 to 29 are implemented.
